# EUROPEAN PATENT SPECIFICATION

(11) **EP 0 478 354 B1**
(45) Date of publication and mention of the grant of the patent: **29.03.1995**
(21) Application number: 91308836.5
(22) Date of filing: 27.09.1991
(51) Int. Cl.: B41J 11/36

(54) **Electronic reprographic system**
Elektronisches Reprographiesystem
Système reprographie électronique

(30) Priority: 28.09.1990 US 589613
(43) Date of publication of application: 01.04.1992
(73) Proprietor: XEROX CORPORATION, Rochester New York 14644 (US)
(72) Inventor: Farrell, Michael E., Fairport, New York, 14450 (US); Matysek, James F., Fairport, New York, 14450 (US); Kinder, Carla J., Ontario, New York, 14519 (US); Austin, John C., Rochester, New York, 14610 (US); Ortiz, Pedro R., Webster, New York, 14580 (US)
(74) Representative: Weatherald, Keith Baynes

(56) References cited:
- US-A- 4 206 996
- US-A- 4 327 993

## Description

The present invention relates to a system of electronic reprographics and, more particularly, to a system of electronic reprographics which performs printer dynamic job recovery without any loss in job integrity.

In light lens printing systems, a lamp or flashing unit flashes light on a document and has an image created synchronously on a photoreceptor belt. The photoreceptor belt picks up toner from which a copy is made.

In electronic reprographic printing systems, a document or series of documents comprising at least one print job are successively scanned. Upon scanning of the documents, image signals are obtained and electronically stored. The signals are then read out successively and transferred to a printer for formation of the images on paper. Once a document is scanned, it can be printed any number of times or processed in any number of ways (e.g., words deleted or added, image magnified or reduced, etc.). If a plurality of documents comprises a job which is scanned, the processing or manipulation of the scanned documents can include deletion of one or more documents, reordering of the documents into a desired order, or addition of a previously-or subsequently-scanned document or documents. The printing or processing can be relatively synchronous with scanning, or asynchronous after scanning. If asynchronous, a time interval exists between scanning and printing or processing. The system can then accumulate a number of scanned jobs in the system memory for subsequent processing or printing. The order of the jobs to be printed may be different from the order of jobs as scanned, depending on the priority of the jobs and the desires of the operator for increasing productivity or through-put and decreasing printer or scanner down-time.

For a variety of reasons, the printed job may include sheets having images of questionable integrity. This can be the result of a system fault, a raster output scanner fault causing a failure to image properly, paper misfeed or misregistration, lack of communication between the raster output scanner and control system, etc.

Printing systems which include job recovery, including sheet purging are disclosed in:
US-A-4,327,993, discloses a method and apparatus for performing job recovery in a reproduction machine, wherein purge sheets are sent to a tray not currently in use or to a tray which contains the rest of a copy job. When the purged sheets are sent to the tray which contains the copy job, they must be separated from the copy job once copying is complete.

US-A-4,206,996 discloses a job recovery method and apparatus wherein duplex job recovery is accomplished by purging all sheets, optionally flagging missing copies by inserting blank sheets into the copy job, and then rerunning the copy job as necessary.

There have thus been attempts to remedy the presence of such sheets by providing the systems with the capability to initially purge themselves well prior to the required sheet and initiate job recovery prior to the required sheet after the control system waits for all possible purge sheets in the paper path to be delivered. Operator attention is required, and there is a loss of job integrity caused by the inability to recover to the correct sheet.

Accordingly, one object of the present invention is to provide an electronic reprographic system which provides job recovery without requiring cycling down of the system.

Accordingly the present invention provides an electronic reprographic system having printer dynamic job recovery which detects the presence of sheets having images of questionable integrity. The system operates to remedy the presence of such sheets by redirecting all sheets of questionable integrity to a purge destination and recovering to the correct sheet in the job without requiring any operator attention.

The invention will be described by way of example with reference to the accompanying drawings, in which like reference numerals refer to like elements and wherein:
Figure 1 is a view depicting an electronic printing system incorporating the print media identification system of the present invention;
Figure 2 is a block diagram depicting the major elements of the printing system shown in Figure 1;
Figure 3 is a plan view illustrating the principal mechanical components of the printing system shown in Figure 1;
Figure 4 is a schematic view showing certain construction details of the document scanner for the printing system shown in Figure 1;
Figures 5A, 5B, and 5C comprise a schematic block diagram showing the major parts of the control section for the printing system shown in Figure 1;
Figure 6 is a block diagram of an operating system, together with printed wiring boards and shared line connections for the printing system shown in Figure 1;
Figure 7 is a view depicting an exemplary job programming ticket and job scorecard displayed on the user interface (UI) touchscreen of the printing system shown in Figure 1;
Figures 8A, 8B and 8C are flowcharts depicting the operation of the Figure 1 system upon the detection of sheets having images of questionable integrity, and
Figure 9 is a chart comparing the dynamic recovery implementations according to the present invention.

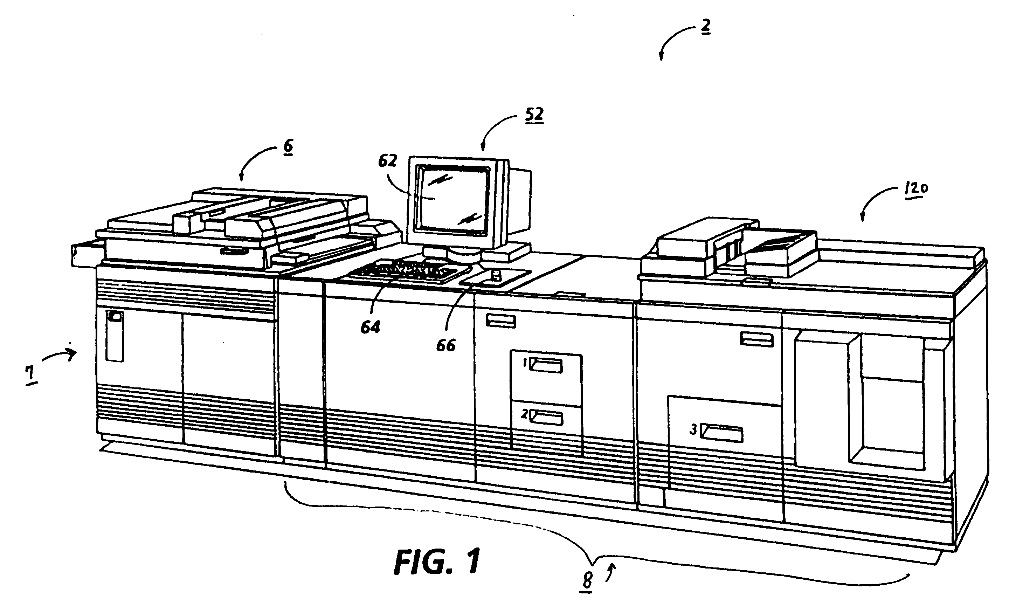

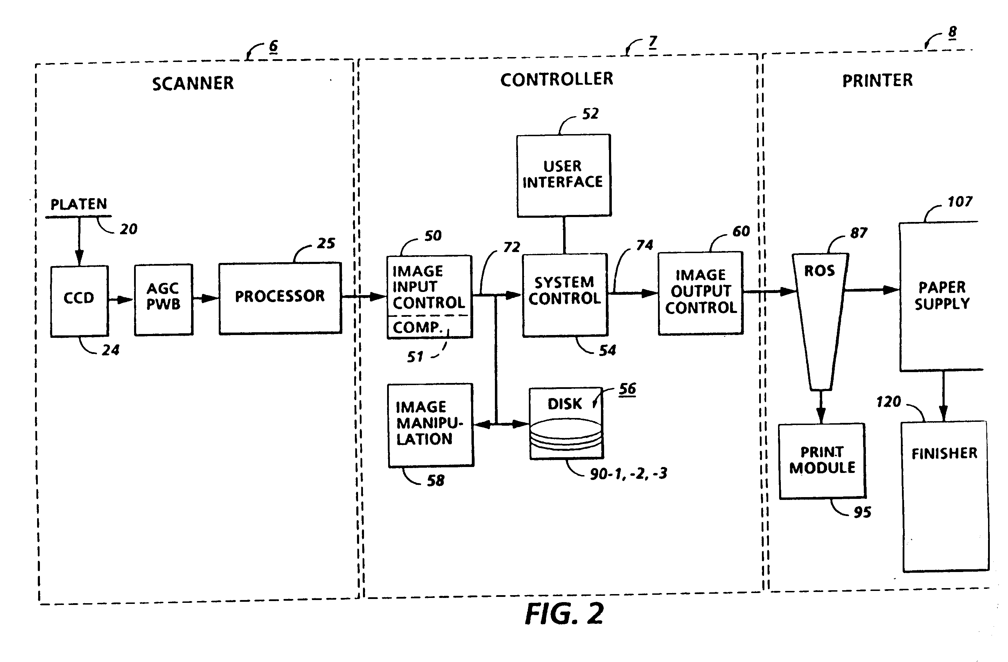

Referring now to the drawings, and particularly to Figures 1 and 2 thereof, there is shown an exemplary laser-based printing system 2 for processing print jobs in accordance with the present invention. Printing system 2, for purposes of explanation, is divided into a scanner 6, controller 7, and printer 8. While a specific printing system is shown and described, the present invention may be used with other types of printing systems, such as ink jet, ionographic, etc.

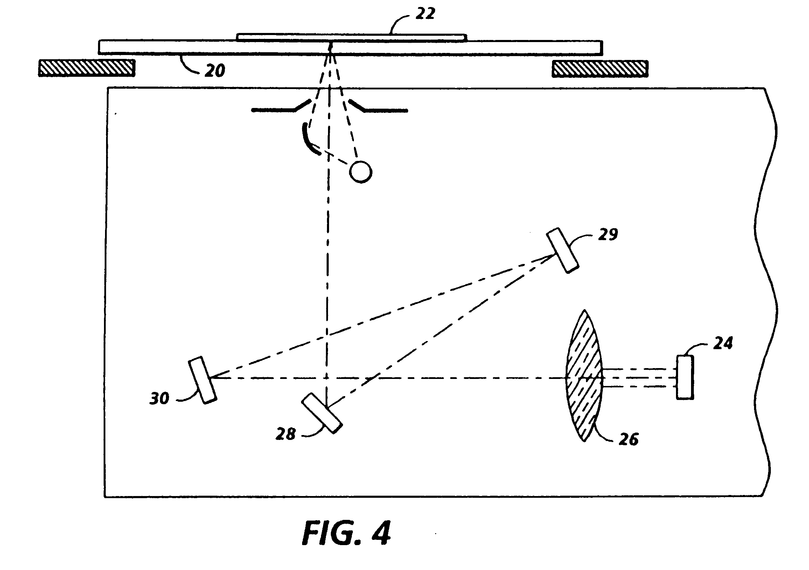

Referring particularly to Figures 2-4, scanner 6 incorporates a transparent platen 20 on which the document 22 to be scanned is located. One or more linear arrays 24 are supported for reciprocating scanning movement below platen 20. Lens 26 and mirrors 28, 29, 30 cooperate to focus array 24 on a line-like segment of platen 20 and the document being scanned thereon. Array 24 provides image signals or pixels representative of the image scanned which, after suitable processing by processor 25, are output to controller 7.

Processor 25 converts the analog image signals output by array 24 to digital and processes the image signals as required to enable system 2 to store and handle the image data in the form required to carry out the job programmed. Processor 25 also provides enhancements and changes to the image signals such as filtering, thresholding, screening, cropping, reduction/enlarging, etc. Following any changes and adjustments in the job program, the document must be rescanned.

Documents 22 to be scanned may be located on platen 20 for scanning by automatic document handler (ADF) 35 operable in either a recirculating document handling (RDH) mode or a semi-automatic document handling (SADH) mode. A manual mode, including a book mode and a computer forms feeder (CFF) mode, is also provided, the latter to accommodate documents in the form of computer fanfold. For RDH mode operation, document handler 35 has a document tray 37 in which documents 22 are arranged in stacks or batches. The documents 22 in tray 37 are advanced by suction feed belt 40, document feed rolls 41 and document feed belt 42 onto platen 20 where the document is scanned by array 24. Following scanning, the document is removed from platen 20 by belt 42 and returned to tray 37 by document feed rolls 44.

For operation in the SADH mode, a document entry slot 46 provides access to the document feed belt 42 between tray 37 and platen 20 through which individual documents may be inserted manually for transport to platen 20. Feed rolls 49 behind slot 46 form a nip for engaging and feeding the document to feed belt 42 and onto platen 20. Following scanning, the document is removed from platen 20 and discharged into catch tray 48.

For operation in the CFF mode, computer forms material is fed through slot 46 and advanced by feed rolls 49 to document feed belt 42, which in turn advances a page of the fanfold material into position on platen 20.

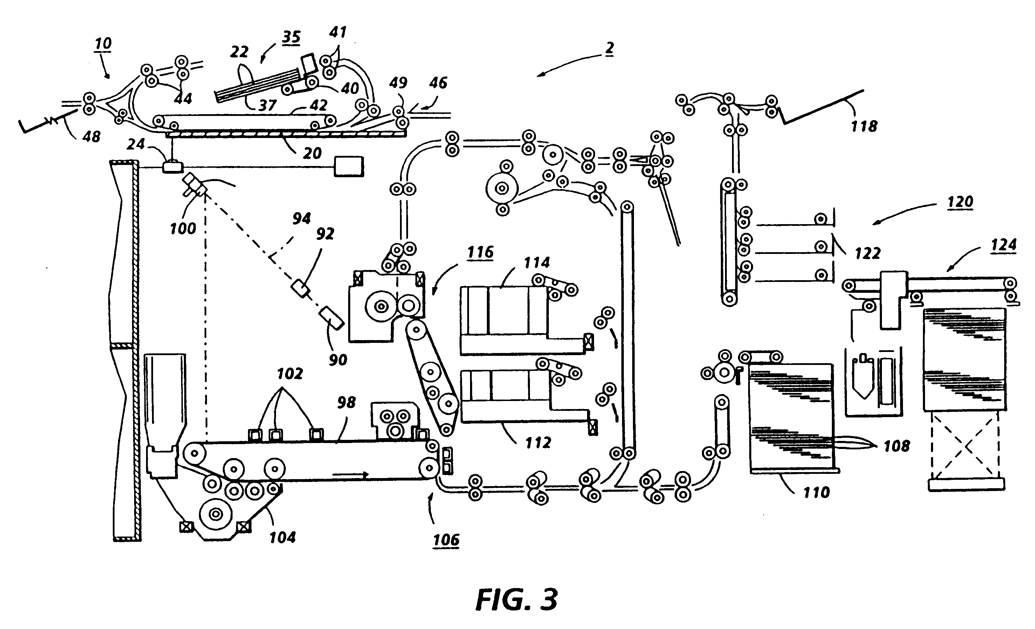

Referring to Figures 2 and 3, printer 8 comprises a laser type printer and, for purposes of explanation, is separated into a raster output scanner (ROS) 87, print module 95, paper supply 107 and finisher 120. ROS 87 has a laser 90, the beam of which is split into two imaging beams 94. Each beam 94 is modulated in accordance with the content of an image signal input by acousto-optic modulator 92 to provide dual imaging beams 94. Beams 94 are scanned across a moving photoreceptor 98 of print module 95 by the mirrored facets of a rotary polygon 100 to expose two image lines on photoreceptor 98 with each scan and create the latent electrostatic images represented by the image signal input to modulator 92. Photoreceptor 98 is uniformly charged by corotrons 102 at a charging station preparatory to exposure by imaging beams 94. The latent electrostatic images are developed by developer 104 and transferred at transfer station 106 to a print medium 108 delivered by paper supply 107. Medium 108 may comprise any of a variety of sheet sizes, types, and colors. For transfer, the print medium is brought forward in timed registration with the developed image on photoreceptor 98 from either a main paper tray 110 or from auxiliary paper trays 112, or 114. The developed image transferred to the print medium 108 is permanently fixed or fused by fuser 116, and the resulting prints discharged to either output tray 118 or to finisher 120. Finisher 120 includes a stitcher 122 for stitching or stapling the prints together to form books, and a thermal binder 124 for adhesively binding the prints into books.

Referring to Figures 1, 2 and 5, controller 7 is, for explanation purposes, divided into an image input controller 50, user interface (UI) 52, system controller 54, main memory 56, image manipulation section 58, and image output controller 60.

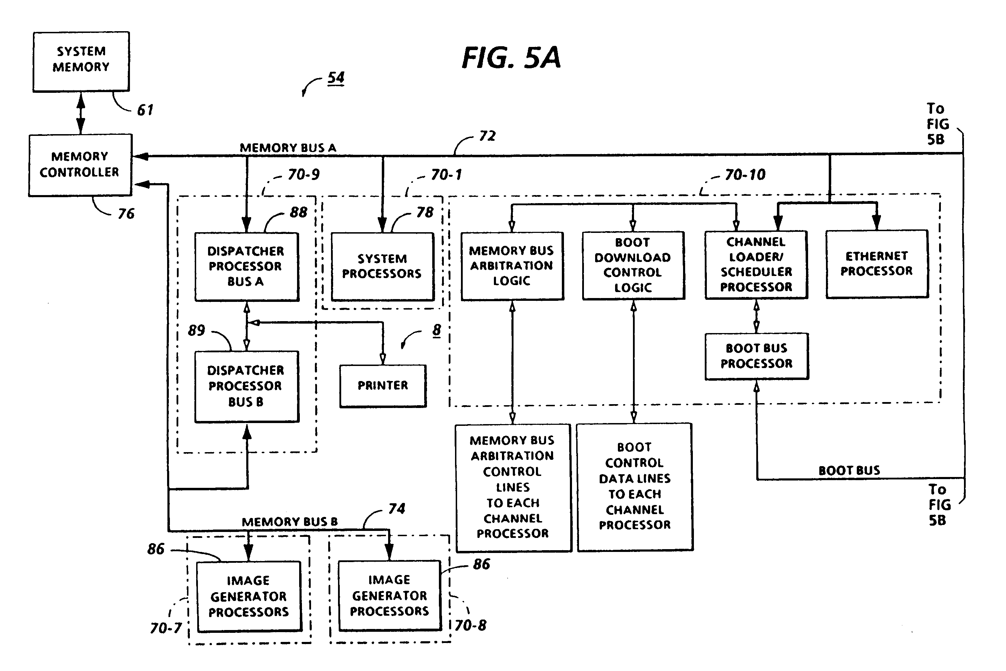

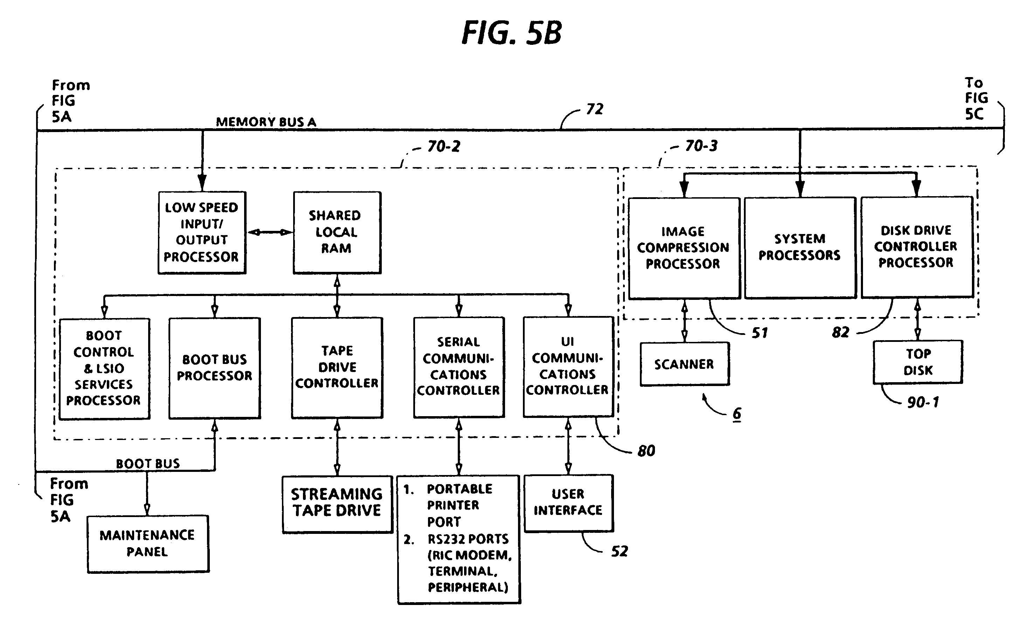

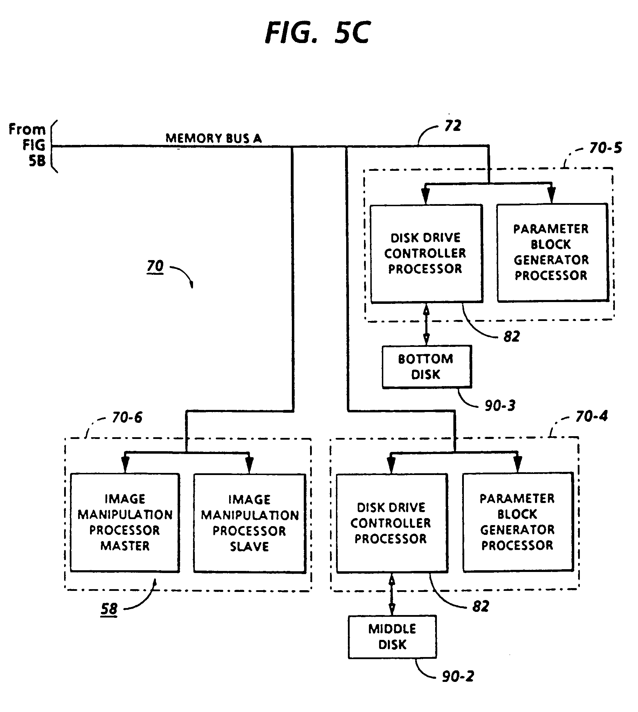

Referring particularly to Figures 5A-5C, controller 7 includes a plurality of printed wiring boards (PWBs) 70, coupled with one another and with system memory 61 by a pair of memory buses 72,74. Memory controller 76 couples system memory 61 with buses 72, 74. PWBs 70 include system processor PWB 70-1 having plural system processors 78; low speed I/O processor PWB 70-2 having UI communication controller 80 for transmitting data to and from UI 52; PWBs 70-3, 70-4 and 70-5 having disk drive controller/processors 82 for transmitting data to and from disks 90-1, 90-2 and 90-3, respectively, of main memory 56 (image compressor/processor 51 for compressing the image data is on PWB 70-3); image manipulation PWB 70-6 with image manipulation processors of image manipulation section 58; image generation processor PWBs 70-7 and 70-8 with image generation processor 86 for processing the image data for printing by printer 8; dispatch processor PWB 70-9 having dispatch processors 88 and 89 for controlling transmission of data to and from printer 8, and boot control- arbitration-scheduler PWB 70-10.

The scanned image data input from processor 25 of scanner section 6 to controller section 7 are compressed by image compressor/processor 51 of image input controller 50 on PWB 70-3. As the image data pass through compressor/processor 51, they are segmented into slices N scanlines wide, each slice having a slice pointer. The compressed image data, together with slice printers and any related image descriptors providing image specific information (such as height and width of the document in pixels, the compression method used, pointers to the compressed image data, and pointers to the image slice pointers), are placed in an image file. The image files, which represent different print jobs, are temporarily stored in system memory 61 which comprises a random access memory (RAM) pending transfer to main memory 56 where the data are held pending use.

As best seen in Figure 1, UI 52 includes a combined operator controller/CRT display consisting of an interactive touchscreen 62, keyboard 64, and mouse 66. UI 52 interfaces the operator with printing system 2, enabling the operator to program print jobs and other instructions, to obtain system operating information, instructions, programming information, diagnostic information, etc. Items displayed on touchscreen 62, such as files and icons, are actuated by either touching the displayed item on screen 62 with a finger or by using mouse 66 to point cursor 67 to the item selected and keying the mouse.

Main memory 56 has plural hard disks 90-1 90-2, 90-3 for storing machine operating system software, machine operating data, and the scanned image data currently being processed.

When the compressed image data in main memory 56 require further processing, or are required for display on touchscreen 62 of UI 52, or are required by printer section 8, the data are accessed in main memory 56. Where further processing other than that provided by processor 25 is required, the data are transferred to image manipulation section 58 on PWB 70-6, where the additional processing steps such as collation, make ready, decomposition, etc., are carried out. Following processing, the data may be returned to main memory 56, sent to UI 52 for display on touchscreen 62, or sent to image output controller 60.

Image data output to image output controller 60 are decompressed and readied for printing by image-generating processors 86 of PWBs 70-7, 70-8 (seen in Figure 5A). Following this, the data are output by dispatch processors 88, 89 on PWB 70-9 to printer 8. Image data sent to printer section 8 for printing is normally purged from memory 56 to make room for new image data.

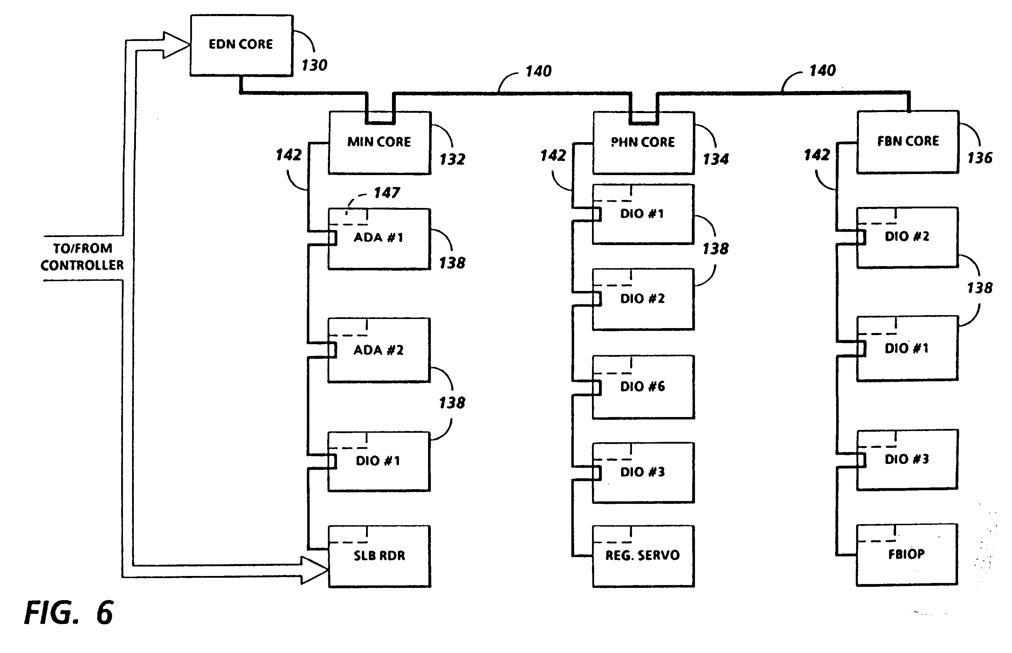

Referring particularly to Figure 6, system control signals are distributed via a plurality of printed wiring boards (PWBs). These include EDN core PWB 130, marking imaging core PWB 132, paper handling core PWB 134, and finisher binder core PWB 136, together with various input/output (I/O) PWBs 138. A system bus 140 couples the core PWBs 130, 132, 134 and 136 with each other and with controller section 7 while local buses 142 serve to couple the I/O PWBs 138 with each other and with their associated core PWB

On machine power up, the operating system software is loaded from memory 56 to EDN core PWB 130 and from there to the remaining core PWBs 132, 134 and 136 *via* bus 140, each core PWB 130, 132, 134, 136 having a boot ROM (not shown) for controlling downloading of operating system software to the PWB, fault detection, etc. Boot ROMs also enable transmission of operating system software and control data to and from PWBs 130, 132, 134 and 136 *via* bus 140 and control data to and from I/O PWBs 138 *via* local buses 142. Additional ROM, RAM, and NVM memory types are resident at various locations within system 2.

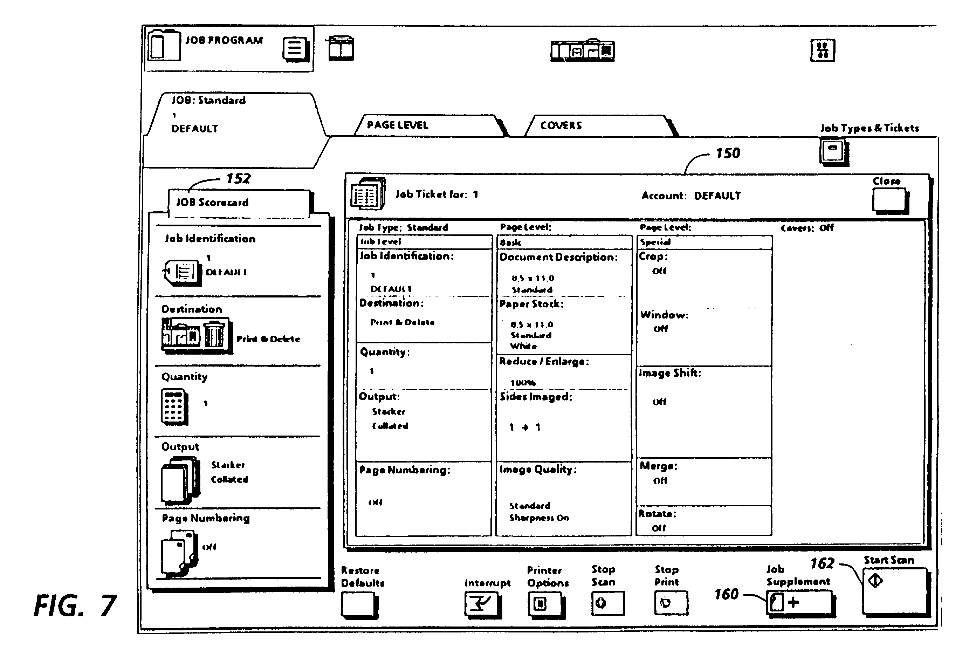

Referring to Figure 7, jobs are programmed in a job program mode in which there is displayed on touchscreen 62 a job ticket 150 and a job scorecard 152 for the job being programmed. Job ticket 150 displays various job selections programmed, while job scorecard 152 displays the basic instructions to the system for printing the job.

System 2 has the capability to detect and correct for various faults. Upon detection of a fault, system 2 will take the appropriate actions defined for each individual fault, or simply take the worst-case action for cases where multiple faults are detected.

Dynamic recovery is defined as printer 8 job recovery without cycle down, and is used only in conjunction with the video loss purge which is described below. Dynamic recovery requires the printer 8 to assess the job completion progress of all partially-completed jobs and start recovery job scheduling without specific direction.

When system 2 is in a full execution mode (i.e., the photoreceptor is being charged and discharged) but a sheet of paper is not being imaged, a pitch skip occurs. A single pitch skip occurs during the printing of a job when controller 7 cannot provide the required print image to the printer 8 at the specified print time for that particular image. Each pitch skip encountered represents a period of time when the printer 8, although in operation, is not producing any hard copy output. The percentage of pitch skips is calculated as the total number of pitch skips divided by the total number of impressions made plus the total number of pitch skips.

Printer 8 can be thought of as requiring an image file at every print pitch, the images being provided to printer 8 by controller 7. If the controller 7 cannot provide the required image before printer 8 is ready to print it, the printer 8 waits, thus incurring pitch skips. The pitch skip is thus because of the controller 7 not being able to provide the required image fast enough.

The printer 8 may skip pitches when performing dynamic recovery after a video loss purge. The printer 8 may skip pitches between the last video loss purge sheet and the next good sheet. The actual number of skip pitches will be decreased by the number of side one sheets committed to a duplex loop at the time that the video loss purge started.

When the printer 8 detects, or is informed, that the video data for a sheet in the paper path has lost integrity, a video loss purge is performed. The video loss purge is performed, for example, when there is detected a failure to image properly or when printer 8 detects sheet misregistration. Detection of such a fault automatically results in the application of the video loss purge.

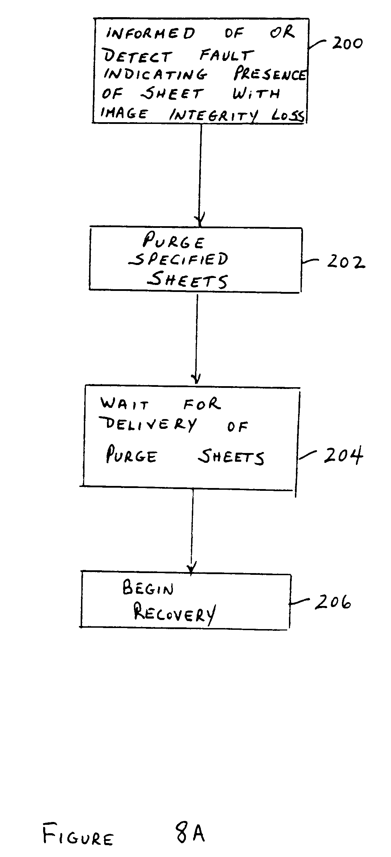

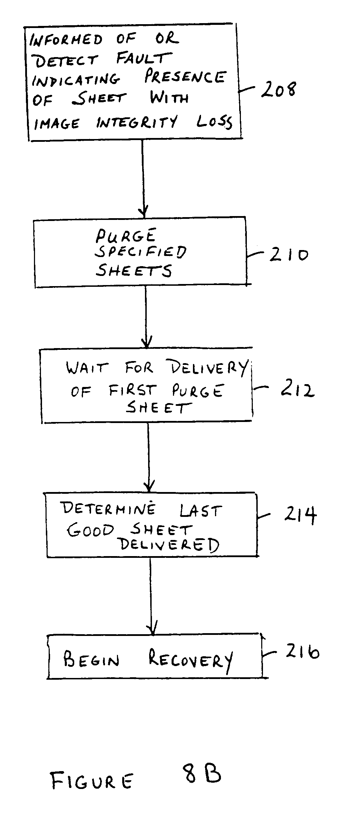

Figures 8A-8C depict exemplary operation of system 2 upon performance of dynamic job recovery according to the present invention.

Referring now to Figure 8A, there is shown a flow chart depicting a basic operation of system 2 upon performance of dynamic job recovery. Printer 8 is informed of, or detects, a fault indicating the presence of a sheet in the paper path having a video image with a loss of integrity (step 200). Upon such detection, printer 8 redirects the specified sheet and all trailing sheets in the paper path to a specified purge location (step 202). Additionally, all scheduling of additional sheets is momentarily interrupted. According to the present invention, up to three sheets in advance of the specified sheet may be purged. Printer 8 waits for delivery of all purged sheets (step 204). Dynamic job recovery can then be performed as soon as the last purged sheet is delivered (step 206).

Figure 8B shows a flowchart depicting an optimized operation of system 2 upon performance of dynamic job recovery. As in Figure 8A, printer 8 is informed of or detects a fault indicating the presence of a sheet in the paper path having a video image with a loss of integrity (step 208). Upon such detection, printer 8 redirects the specified sheet and all following sheets to a specified purge location (step 210). All scheduling of additional sheets is momentarily interrupted. Printer 8 waits for delivery of the first purge sheet (step 212). From the first purge sheet delivery, the printer 8 determines the last good sheet (i.e., sheet whose image has no loss of integrity) which has been successfully delivered (step 214). Optimized dynamic job recovery can then be performed as soon as the first purged sheet is delivered (step 216). Job recovery includes rescheduling of the job based on the delivery of the last good sheet.

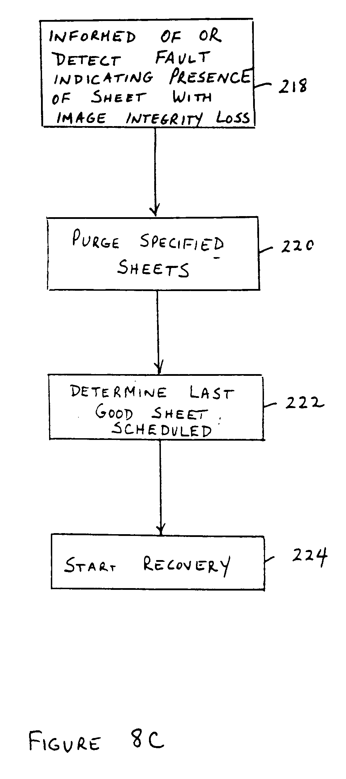

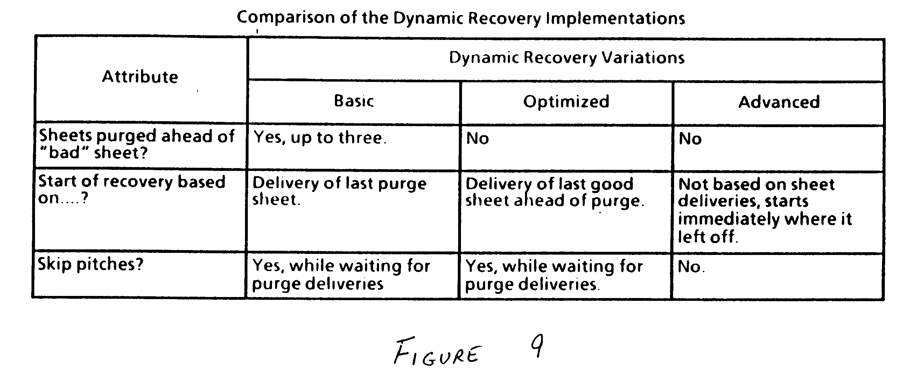

Figure 8C shows a flowchart depicting an advanced operation of system 2 upon performance of dynamic job recovery. Printer 8, as in the previous operations, is informed of, or detects, a fault indicating the presence of a sheet in the paper path having a video image with a loss of integrity (step 218). Upon such detection, printer 8 redirects the specified sheet and all following sheets to a specified purge location (step 220). Using information on the last sheet scheduled stored in the printer controller memory, the printer 8 immediately determines the last good sheet scheduled prior to the fault occurrence (step 222). Recovery to the correct sheet begins immediately without being based upon the delivery of purged sheets (step 224). Figure 9 is a chart providing an overall comparison of the exemplary operations described above.

By limiting the number of sheets purged by the system, dynamic job recovery can thus be initiated significantly sooner, since the system is not required to await delivery of a large number of purged sheets. Only a small number of sheets need be purged. Job scheduling is resumed with the next sheet, thereby improving printer productivity while reducing the operator-perceived malfunction rate. A foundation is provided for a re-try strategy for all malfunctions that do not require immediately turning off paper path drives. As the dynamic job recovery is performed automatically, no operator attention is required. Job integrity is maintained by job rescheduling to replace all sheets purged to the purged destination.

## Claims

1. A method for dynamic job recovery in an electronic reprographic system, comprising the steps of:
automatically detecting the presence of a printed sheet having an image thereon with a relative loss of integrity;
automatically purging specified sheets to a specified location upon such detection, the purging step including purging a predetermined number of sheets in advance of the first sheet detected having an image thereon with loss of integrity;
awaiting delivery of the purged sheets at the specified location, and
initiating job recovery as soon as all the specified sheets have been delivered.

2. The method as claimed in claim 1, wherein the purging step includes initiating purging at the first sheet detected having an image thereon with a loss of integrity.

3. The method as claimed in claim 1 or 2, wherein the step of initiating job recovery includes recovering to the correct sheet to complete a job being printed.

4. The method as claimed in any preceding claim, wherein the purging step includes purging up to three sheets in advance of the first sheet.

5. An apparatus for dynamic job recovery in an electronic reprographic system, comprising:
means (200) for automatically detecting the presence of a printed sheet having an image thereon with a relative loss of integrity;
means (202) for automatically purging specified sheets to a specified location upon such detection, the purge means purging a predetermined number of sheets in advance of the first sheet detected having an image thereon with loss of integrity;
means (204) for awaiting delivery of the purged sheets at the specified location, and
means (224) for initiating job recovery as soon as all the specified sheets have been delivered.

6. The apparatus as claimed in claim 5, wherein the purge means initiates purging at the first sheet detected having an image thereon with a loss of integrity.

7. The apparatus as claimed in claim 5 or 6, wherein the recovery means recovers to the correct sheet to complete a job being printed.

8. The apparatus as claimed in any of claims 5 to 7, wherein the purge means purges up to three sheets in advance of the first sheet.

9. A method for dynamic job recovery in an electronic reprographic system, comprising the steps of:
automatically detecting the presence of a printed sheet having an image thereon with a relative loss of integrity;
automatically purging specified sheets to a specified location upon such detection, the purging step initiating purging at the first sheet detected having an image thereon with a loss of integrity, and
immediately initiating job recovery upon detection of a sheet having an image thereon with a relative loss of integrity.

10. The method as claimed in claim 9, wherein the job recovery initiating step includes recovering to the correct sheet to complete a job being printed.

11. An apparatus for dynamic job recovery in an electronic reprographic system, comprising:
means for automatically detecting the presence of a printed sheet having an image thereon with a relative loss of integrity;
means for automatically purging specified sheets to a specified location upon such detection, the purge means initiating purging at the first sheet detected having an image thereon with a loss of integrity, and
means for immediately initiating job recovery upon detection of a sheet having an image thereon with a loss of integrity.

12. The apparatus as claimed in claim 11, wherein the recovery means recovers to the correct sheet to complete a job being printed.

## Patentansprüche

1. Verfahren zur dynamischen Aufgaben-Fehlerbehebung bei einem elektronischen Reprographie-System mit den Schritten:
automatisches Erfassen der Anwesenheit eines Druckblattes mit einem darauf befindlichen Bild, das einen relativen Integritätsverlust aufweist;
automatisches Aussondern angegebener Blätter zu einem angegebenen Ort nach einer solchen Erfassung, wobei der Aussonderschritt das Aussondern einer vorbestimmten Anzahl von Blättern vor dem ersten Blatt umfaßt, das mit einem daran befindlichen Bild mit Integritätsverlust erfaßt wurde; Abwarten der Lieferung der ausgesonderten Blätter an den festgelegten Ort, und
Einleiten von Aufgaben-Fehlerbehebung, sobald alle angegebenen Blätter abgeliefert wurden.

2. Verfahren nach Anspruch 1, bei dem der Aussonderschritt das Einleiten der Aussonderung an dem ersten erfaßten Blatt enthält, das ein daran befindliches Bild mit einem Integritätsverlust besitzt.

3. Verfahren nach Anspruch 1 oder 2, bei dem der Schritt des Einleitens von Aufgaben-Fehlerbehebung das Beheben des Fehlers zu dem korrekten Blatt enthält, um eine im Druck befindliche Aufgabe zu vervollständigen.

4. Verfahren nach einem der vorangehenden Ansprüche, bei dem der Aussonderungschritt das Aussondern von bis zu drei Blättern vor dem ersten Blatt einschließt.

5. Vorrichtung zur dynamischen Aufgaben-Fehlerbehebung bei einem elektronischen Reprographie-System, welche Vorrichtung umfaßt:
Mittel (200) zum automatischen Erfassen der Anwesenheit eines Druckblattes mit einem daran befindlichen Bild mit einem relativen Integritäts-Verlust;
Mittel (202) zum automatischen Aussondern festgelegter Blätter zu einer festgelegten Stelle auf eine derartige Erfassung hin, wobei das Aussonderungsmittel eine vorbestimmte Anzahl von Blätter vor dem ersten mit einem daran befindlichen Bild mit Integritäts-Verlust behafteten Blatt aussondert;
Mittel (204), um die Ablieferung der ausgesonderten Blätter an einem bestimmten Ort abzuwarten, und
Mittel (224) zum Einleiten von Aufgaben-Fehlerbehebung, sobald alle angegebenen Blätter abgeliefert wurden.

6. Vorrichtung nach Anspruch 5, bei der das Aussonderungsmittel das Aussondern an dem ersten erfaßten Blatt mit einem mit Integritäts-Verlust behafteten Bild daran einleitet.

7. Vorrichtung nach Anspruch 5 oder 6, bei der das Fehlerbehebmittel zu dem korrekten Blatt zurückkehrt, um eine in Druck befindliche Aufgabe fertigzustellen.

8. Vorrichtung nach einem der Ansprüche 5 bis 7, bei dem das Aussonderungsmittel bis zu drei Blätter vor dem ersten Blatt aussondert.

9. Verfahren zur dynamischen Aufgaben-Fehlerbehebung in einem elektronischen Reprographie-System mit den Schritten: automatisches Erfassen der Anwesenheit eines Druckblattes mit einem daran befindlichen mit relativem Integritäts-Verlust behafteten Bild;
automatisches Aussondern festgelegter Blätter zu einem angegebenen Ort auf eine solche Erfassung hin, wobei der Aussonderungsschritt das Aussondern an dem ersten mit einem Integritäts-Verlust behafteten Bild versehenen Blatt einleitet; und
unmittelbares Einleiten von Aufgaben-Fehlerbehebung auf eine Erfassung eines Blattes mit einem daran befindlichen Bild mit einem relativen Integritäts-Verlust.

10. Verfahren nach Anspruch 9, bei dem der Schritt zum Einleiten der Aufgaben-Fehlerbehebung das Beheben des Fehlers bei dem korrekten Blatt zur Vervollständigung einer in Druck befindlichen Aufgabe enthält.

11. Vorrichtung zur dynamischen Aufgaben-Fehlerbehebung in einem elektronischen Reprographie-System, welche umfaßt: Mittel zum automatischen Erfassen der Anwesenheit eines Druckblattes mit einem daran befindlichen Bild mit einem relativen Integritäts-Verlust;
Mittel zum automatischen Aussondern angegebener Blätter zu einer angegebenen Stelle auf eine solche Erfassung hin, wobei das Aussonderungsmittel das Aussondern an dem ersten Blatt einleitet, an dem die Anwesenheit eines Bildes mit einem Integritäts-Verlust erfaßt wurde, und
Mittel zum unmittelbaren Einleiten von Aufgaben-Fehlerbehebung auf eine Erfassung eines Blattes mit einem daran befindlichen Bild mit einem Integritäts-Verlust.

12. Vorrichtung nach Anspruch 11, bei der das Fehlerbehebmittel die Fehlerbehebung bei dem korrekten Blatt durchführt, um eine in Druck befindliche Aufgabe zu vervollständigen.

## Revendications

1. Procédé pour récupération dynamique de travail dans un système de reprographie électronique comprenant les étapes consistant à :
détecter automatiquement la présence d'une feuille imprimée ayant une image sur celle-ci avec une perte relative d'intégrité,
vider automatiquement des feuilles spécifiées à un emplacement spécifié sur une telle détection, l'étape du vidage comportant le vidage d'un nombre prédéterminé de feuilles avant la première feuille détectée ayant une image sur celle-ci avec une perte d'intégrité,
attendre la délivrance des feuilles vidées à l'emplacement spécifié et,
lancer la récupération du travail dès que toutes les feuilles spécifiées ont été délivrées.

2. Procédé selon la revendication 1, dans lequel l'étape de vidage comporte l'initiation de vidage à la première feuille détectée ayant une image sur celle-ci avec une perte d'intégrité.

3. Procédé selon la revendication 1 ou 2, dans lequel l'étape d'initiation de la récupération de travail comporte la récupération de la feuille correcte pour achever un travail qui doit être imprimé.

4. Procédé selon l'une quelconque des revendications précédentes, dans lequel l'étape de vidage comporte le vidage de jusqu'à trois feuilles avant la première feuille.

5. Dispositif pour la récupération dynamique de travail dans un système de reprographie électronique comprenant :
un moyen (200) pour détecter automatiquement la présence d'une feuille imprimée ayant une image sur celle-ci avec une perte relative d'intégrité,
un moyen (202) pour vider automatiquement des feuilles spécifiées à un emplacement spécifié sur une telle détection, le moyen de vidage vidant un nombre prédéterminé de feuille avant la première feuille détectée ayant une image sur celle-ci avec une perte d'intégrité,
un moyen (204) pour attendre la délivrant des feuilles vidées à l'emplacement spécifié et,
un moyen (224) pour initier la récupération du travail dès que toutes les feuilles spécifiées ont été délivrées.

6. Dispositif selon la revendication 5, dans lequel le moyen de vidage initie le vidage à la première feuille détectée ayant une image sur celle-ci avec une perte d'intégrité.

7. Dispositif selon la revendication 5 ou 6, dans lequel le moyen de récupération récupère la feuille correcte pour achever un travail qui doit être imprimé.

8. dispositif selon l'une quelconque des revendications 5 à 7, dans lequel le moyen de vidage vide jusqu'à trois feuilles avant la première feuille.

9. Procédé pour la récupération dynamique de travail dans un système de reprographie électronique comprenant les étapes consistant à :
détecter automatiquement la présence d'une feuille imprimée ayant une image sur celle-ci avec une perte relative d'intégrité,
vider automatiquement des feuilles spécifiées à un emplacement spécifié sur une telle détection, l'étape de vidage initiant le vidage à la première feuille détectée ayant une image sur celle-ci avec une perte d'intégrité, et
initier immédiatement la récupération du travail sur détection d'une feuille ayant une image sur celle-ci avec une perte relative d'intégrité.

10. Procédé selon la revendication 9, dans lequel l'étape de lancement de la récupération de travail comporte la récupération de la feuille correcte afin d'achever un travail qui doit être imprimé.

11. Dispositif pour la récupération dynamique de travail dans un système de reprographie électronique comprenant :
un moyen pour détecter automatiquement la présence d'une feuille imprimée ayant une image sur celle-ci avec une perte relative d'intégrité,
un moyen pour vider automatiquement des feuilles spécifiées à un emplacement spécifié sur une telle détection, le moyen de vidage initiant le vidage à la première feuille détectée ayant une image sur celle-ci avec une perte d'intégrité, et
un moyen pour lancer immédiatement la récupération de travail sur détection d'une feuille ayant une image sur celle-ci avec une perte d'intégrité.

12. Dispositif selon la revendication 11, dans lequel le moyen de récupération récupère la feuille correcte afin d'achever un travail qui doit être imprimé.
